# EUROPEAN PATENT APPLICATION

(11) **EP 1 473 873 A2**
(43) Date of publication of application: **03.11.2004**
(21) Application number: 04101749.2
(22) Date of filing: 27.04.2004
(51) Int. Cl.: H04L 12/24, H04Q 7/32

(54) **Device management**

(30) Priority: 02.05.2003 FI 20030662
(71) Applicant: Nokia Corporation, 02150 Espoo (FI)
(72) Inventor: Chatrath, Vishal, 90570 Oulu (FI); Klingele, Michael, 90500 Oulu (FI); Sahinoja, Mikko, 33580 Tampere (FI); Frosterus, Toni, 02630 Espoo (FI)
(74) Representative: Kaukonen, Juha Veikko

(57) **Abstract**

The present invention relates to initiating device management between a management server and a client. An initiation message is transmitted from the client to an intermediary node maintaining information about management servers. An appropriate management server is selected for the client by the intermediary node on the basis of the initiation message and the management server information. A request for initiating device management for the client is transmitted to the management server from the intermediary node. As a response to the request, a device management message is transmitted from the management server to the client.

## Description

### FIELD OF THE INVENTION

The present invention relates to device management, and more particularly to initiating device management in different environments.

### BACKGROUND OF THE INVENTION

In order to use services enabled by a new mobile station and a subscription, many settings need to be adjusted in the mobile station. Especially mobile Internet services require technology and operator specific settings before the mobile station may be used to access the Internet. The significance of device management is emphasized as different data processing devices, such as mobile stations, become more complex. It is laborious and difficult to configure these settings manually by the user and thus automated mechanisms for sending these settings to terminals are needed. A current method of sending connection settings, for instance GPRS (General Packet Radio Service), MMS (Multimedia Messaging Service), e-mail, Web, WAP (Wireless Application Protocol) settings, to mobile stations by a message is rather cumbersome, involving many variables which need to be known by the first time user. In a typical scenario, when a new user acquires a phone, he or she needs to know a particular initiation message (usually cryptic) to send to a particular operator specific number to get a particular setting. On reception of the setting, the user may need to save the settings in a particular order for the mobile station to work. As the number of settings increase, so does the number of messages that need to be sent to get the settings. There have been plans for storing a required initiation message on a SIM card, which would ease the adoption of new services. However, it is possible that this kind of a SIM card would not contain the required messages when e.g. the user has purchased a new or a second hand mobile station enabling new kind of services to be used. In these cases, the user somehow needs to find out how the correct settings can be obtained for the mobile station. Client side initiation of change in settings may also be needed when roaming between networks. Thus the initiation of settings downloading can be very difficult and frustrating for the user.

More advanced device management technologies have also been developed. US published patent application US 2002/0112047 discloses a system for managing wireless data terminals using a GPRS network whereby management server sends, as a response to a request from a client terminal, management commands to a terminal by utilizing a mailbox. A device management (DM) standard has been developed by OMA (Open Mobile Alliance). The OMA DM protocol specifies the protocol for transferring management actions between the client and the management server and the XML elements to be used in the messages, thus enabling consistent functioning of different devices supporting the standard. OMA DM currently provides two device management technologies; OMA WAP client provisioning based on the WAP Push architecture and OMA SyncML DM based on SyncML technology. The idea is to establish a trusted relationship with a DM server on the operator side to download connectivity settings. However, these technologies merely specify the communication between the client and the management server and do not provide solution to the initiation problem relating to user (client side) initiated device management actions stated above. The client side initiation is critical for giving the end user control. Even though the mobile station supports the OMA DM standard, the network operator or service provider specific initiation of device management still remains cumbersome for the user.

### BRIEF DESCRIPTION OF THE INVENTION

An object of the present invention is thus to further ease the initiation of device management. The objects of the invention are achieved by a method, a system, data processing devices and a computer program product which are characterized by what is stated in the independent claims. Preferred embodiments of the invention are disclosed in the dependent claims.

The invention is based on the idea of maintaining an intermediary node for delivering initiation requests for correct device management servers on the basis of requests from clients. The intermediary node maintains information about different management servers. An initiation message is sent from a client requesting device management, e.g. requiring settings for a new service, to the intermediary node. The intermediary node selects an appropriate management server for the client. The intermediary node can then send a request for initiating device management to the selected management server.

Device management is to be understood in general as any activity related to sending from a first device (server) to a second device (client) one or more settings and/or commands influencing the function of the second device. At its simplest, device management may include a unidirectional message containing access settings from the management server to the client.

The invention enables centralized control of device management initiation. The user or the terminal does not need to know the correct device management server since the intermediary node determines it. This encourages adoption of new services, especially mobile data services, thereby providing better usability for the user and enabling increasing usage of those services. Actually, the manual entry for provisioning a terminal will become unnecessary as it becomes possible to reach appropriate device management server for provisioning the terminal by the intermediary node. Information on new or changed management servers only needs to be updated to the intermediate node. This is a considerable advantage as all the changes in the management server architecture/functions can be hidden from the client terminals and end-users. The terminal may be configured to send the initiation message to the intermediary node as the user selects the service for the first time, thus making the adoption of new services very easy for the user.

There are many ways in which the intermediary node can assist in service set-up. According to one embodiment, the initiation message comprises detailed information about the device, e.g. the device mode or a unique device identifier. Device specific information may be utilized in the intermediate node for device management purposes or for determining warranty periods, for instance. According to one embodiment, the first time adoption of a new terminal can be registered to determine a warranty period. According to one embodiment, the intermediary node determines and sends correct initiation request messages to all device management servers containing settings for the services enabled by the device and/or the subscription. Thus, the intermediary node may be manufacturer specific and take into account model specific features relating to device management.

According to another embodiment, the intermediary node maintains information on properties of the management servers and forms the request for the selected management server based on this information. The initiation message from the client may be modified or an entirely new message may be created for the request. This embodiment does not require that the initiation message from the client should necessarily be according to any management protocol as required by the applied management protocol but the intermediary node may perform the necessary conversion. Thus the system may, for instance, be easily upgraded since the protocol between the intermediary node and the management server is transparent to the terminal.

### BRIEF DESCRIPTION OF THE DRAWINGS

In the following, the invention will be described in greater detail by means of preferred embodiments and with reference to the accompanying drawings, in which
Figure 1 illustrates a device management system according to a preferred embodiment of the invention;
Figure 2 is a flow diagram illustrating device management initiation according to a preferred embodiment of the invention;
Figure 3 is a signalling diagram illustrating initiation of device management utilizing configuration messages; and
Figure 4 is a signalling diagram illustrating initiation of device management utilizing a device management protocol.

### DETAILED DESCRIPTION OF THE INVENTION

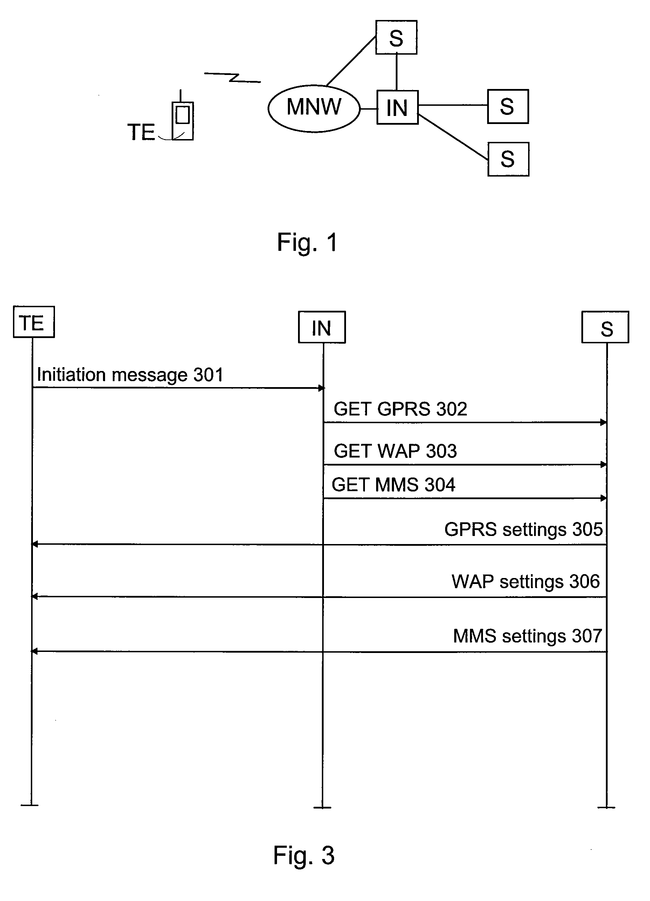

Figure 1 shows a device management system according to a preferred embodiment of the invention. The system comprises one or more terminals TE, one or more device management servers S and at least one intermediary node IN. The terminal TE comprises a management client functionality, i.e. any functionality capable of receiving management settings and/or actions from a management server S. In the example of Figure 1, the terminals TE gain network access by a mobile network MNW, however, a network connection may also be arranged via wired networks. The mobile network MNW may be any known or future mobile network, such as a GSM network, a GSM/GPRS network, a 3G network [e.g. a network according to the 3GPP (Third Generation Partnership Project) system], or a WLAN network. The management server S is provided in the mobile network MNW or in some other network to which data may be send from the mobile network MNW. The assumption in the following embodiments is that from the point of view of device management, the terminal TE serves as the client device and the server S as the management server. The server S may manage several client devices TE. A network server or a PC typically acts as a server S. A terminal TE is typically a mobile phone, a PC (Personal Computer), a laptop computer or a PDA device. It is to be noted that these device management roles may change, i.e. it is possible that the TE and the S have capabilities for operating as the management server and/or the client device.

One widely used transport layer service in several mobile networks can be arranged by the WAP, the WSP layer (Wireless Session Protocol) of which is used to provide transport service to the device management application layer in the client device TE and the server S. In WAP version 2.0, an HTTP (Hypertext Transfer Protocol) can also be used. In this case, the system comprises at least one WAP gateway and optionally one or more WAP proxy servers. The WAP supports many lower-level transfer techniques, such as circuit or packet-switched data transfer or SMS-based transfer in accordance with the properties of the underlying mobile network MNW. The connections between the mobile network MNW, servers S and intermediary node IN are typically arranged by a TCP/IP (Transport Control Protocol/Internet Protocol).

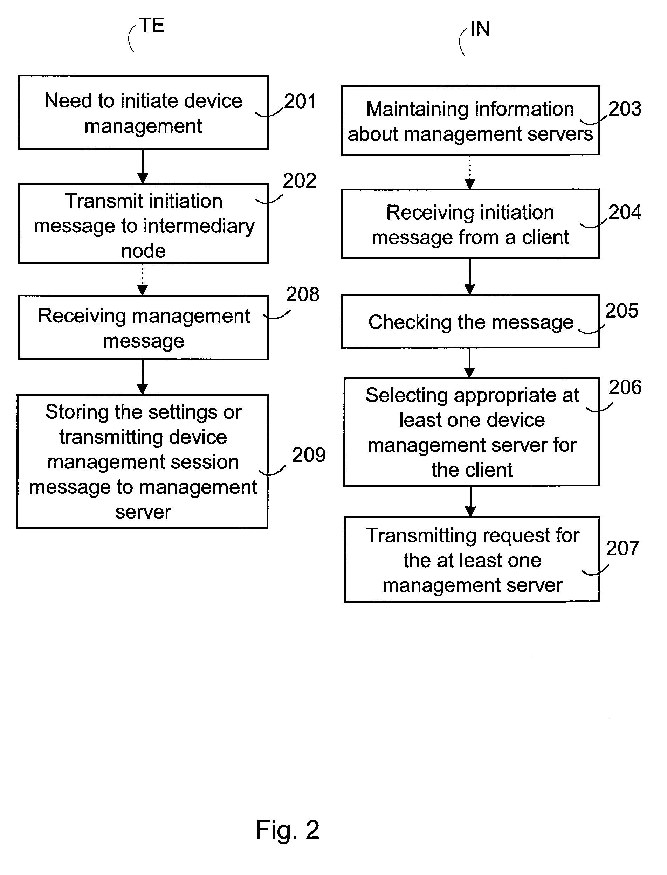

The terminals TE and the servers S comprise memory, a user interface, a transmitter and a receiver for arranging data transmission, and a central processing unit comprising one or more processors. Management data may be stored in the memory of the S from which it is transferred to one or more managed clients TE. In response to computer program codes stored in the memories of the terminal TE and the management server S and executed in their central processing items, the terminal TE and the server S implement the inventive means related to device management initiation, some embodiments of which are shown in Figures 2, 3 and 4. The computer programs may be obtained through a network and/or they may be stored in memory means, such as a disc, CD-ROM disc or other external memory means from which they can be downloaded into the memories of the S and TE. Hardware solutions or a combination of hardware and software can also be used. It should be noted that the intermediary node IN does not have to be a separate device, but the functionality thereof may be implemented in any existing or future network element.

Figure 2 illustrates device management initiation according to a preferred embodiment of the invention. A need arises 201 in the client terminal TE to initiate device management. The terminal TE can be configured to enter this phase and the present method either automatically without any user initiative or based on received input from the user of the TE in many different situations, such as the following ones:
- adoption of a new terminal device TE
- adoption of subscription, typically including a new subscriber identity module (SIM) in the terminal TE
- provision of new service
- roaming in a foreign network whose connectivity settings need to be provisioned for the terminal
- settings of an already provisioned service have been changed and can only be changed based on user initiation
- transferring settings between devices if a user has multiple devices. Devices could play the roles of the server S or terminal TE interchangeably
- a user enters the settings menu and accidentally supplies incorrect settings. There is no need to call the support line of the operator, but the device management may be initiated to automatically download correct settings.

Regardless of the situation causing step 201, the TE forms an initiation message and sends 202 it to the intermediary node IN. The format of the initiation message is very flexible, it may be in accordance with the management protocol used between the S and the TE or it may be specifically tailored for the intermediary node IN. The address or number of the intermediary node IN is preferably pre-stored in the memory of the terminal device or in the memory of an IC card insertable in the terminal TE and holding the subscriber identity module. The terminal TE is preferably also arranged to automatically collect all information for the initiation message; this information depends on the selected implementation. The initiation of the device management can be made very easy for the user of the terminal TE. A single click of an appropriate icon can cause the terminal TE to enter steps 201 and 202.

The intermediary node IN maintains 203 information about the management servers S to which it can send requests for initiation of device management. The intermediary node IN receives the initiation message from the terminal TE in step 204. Preferably, the IN is configured to serve a large number of client devices TE in order to provide the advantages of a centralized system. The IN checks 205 the message at least for indication of an appropriate management server, which is selected based on the management server information in step 206. A request for initiating device management is then sent 207 to the selected management server S. Depending on the selected embodiment, the request 207 may be the initiation message as such, a modified initiation message or a completely new message formed in the IN. As a response to this request, the server S can then initiate device management with the terminal TE. The terminal TE receives in step 208 a device management message from the server S. Depending on the device management implementation, in step 209 the TE stores the provisioned settings or sends a device management session message to the server S, e.g. a client initialization package according to the OMA SyncML DM protocol).

As illustrated below, there are many possible embodiments of the above illustrated method. It should be noted that the embodiments are not alternatives but the TE and the IN may support a combination two or more of such embodiments. According to a preferred embodiment, subscriber specific information is transferred in the initiation message 202 and utilized 205, 206 in the intermediary node IN. The IN may check 205 one or more subscriber specific numbers from the initiation message. In case of GSM or 3GPP networks, this number is preferably an MSISDN number. Since the settings of networks are network operator specific, it is feasible that each network operator has a management server S of its own. Thus, it will suffice to maintain 203 addresses or numbers of the management servers S operator or network specifically instead of e.g. storing them subscriber specifically. The TE can be arranged to specify the number in the initiation message. The IN can check 205 the network or the network operator from the MSISDN number of the message or the IMSI identifier associated with the transfer of the initiation message. For instance, the IN maintains a mapping list in which the combinations of mobile country codes and mobile network codes are associated with the addresses of the management servers S. Thus, the IN selects 206 the management server S associated with the determined operator. It is important to note that the management server S may also be provided by a third party, e.g. a specific service provider instead of the network operator.

Further, also subscription conditions may be taken into account at the intermediary node IN based on a subscriber identifier in the initiation message. For instance, the request is sent only regarding services the subscriber is able to use.

According to a preferred embodiment, a list of country specific intermediary node numbers or addresses is stored in the terminal TE, preferably in the removable subscriber identity module. When the subscriber is roaming in a foreign country, the correct intermediary node is selected in the TE (phase 202) based on the country identification established during connection set-up to the local network. Next, the TE sends 202 the initiation message to the local intermediary node IN. The local IN can then, based on a network identifier of the roamed local network associated with the received initiation message select 206 a local management server S arranged to manage settings related to the local network or services thereof. Alternatively, the initiation can always be arranged via the same IN, whereby there is no need to store the list of nodes IN in the terminal TE but, instead, the IN maintains information also about foreign management servers S. Thus, for roaming subscribers, the IN can maintain 203 specific information about default management servers (not associated with the subscriber or his or her home operator) containing settings of local networks. This embodiment enables easy device management initiation also in roamed networks in which local settings often need to be configured for to the roaming terminal. The roaming terminal TE may be configured to initiate device management to provide local configuration by a single click thereby not requiring any knowledge by the user on the local network. For instance, when a terminal provisioned in Finland is roaming in Australia, a single click of an appropriate icon can initiate the device management (steps 201, 202). By the IN, the appropriate device management server S is selected to provision the local settings to the terminal TE.

According to another preferred embodiment, the initiation message from the terminal TE comprises device specific information. This information may be a device identifier, such as an IMEI (International Station Equipment Identity), a terminal model identifier or some other information relating to the properties of the terminal TE. For instance, the TE may be arranged to include any device specific information stored in the DevInfo management object of a SyncML DM compliant client device. The IN may thus take into account the device model specific properties of the terminal TE when selecting the management server S and/or when forming the request 206 for the selected management server S. For instance, this device information may be used to form an appropriate request to the management server S. The IN may be configured to only send requests for such access settings that the terminal model is capable of supporting and thus incompatible setting packages to the TE or the capability check at the server S can be avoided. One way to implement this embodiment is that the IN maintains device property information associated with terminal identifiers or more preferably with terminal model identifiers. Another way is to determine more detailed property information in the terminal TE and send it to the IN in the initiation message.

According to an embodiment, the intermediary nodes IN are terminal manufacturer specific, e.g. Nokia provides one or more intermediary nodes for all Nokia terminals. The IN may maintain a list of registered devices TE. The IN checks the device identifier and registers it on the list when a new identifier is received. Device information may be used for many purposes, e.g. this embodiment provides a tool for determining warranty periods reliably from the day the device is actually put into use. According to a further embodiment, the device information can be used for software update purposes. In this embodiment, the software version identifier from the TE is used to select software update packages to be sent by the selected device management server S.

As has already been described, the IN maintains 203 at least addressing information about the management servers S associated in one or more ways to the subscriber of the TE, the network or service the TE is utilizing and/or the terminal TE. The IN may, according to a preferred embodiment, also maintain 203 further information on properties of the management servers S. This property information may comprise a list of managed networks, settings and information on the protocols supported by the management servers S. For instance, the IN may maintain a list of suitable message formats for the requests transmitted in phase 207. This management server property information may be used when selecting 206 the appropriate management server/or and when forming the request. It is further possible that one or more of the client device, server device or subscription properties are inquired from some other entity outside the IN, e.g. a subscriber register.

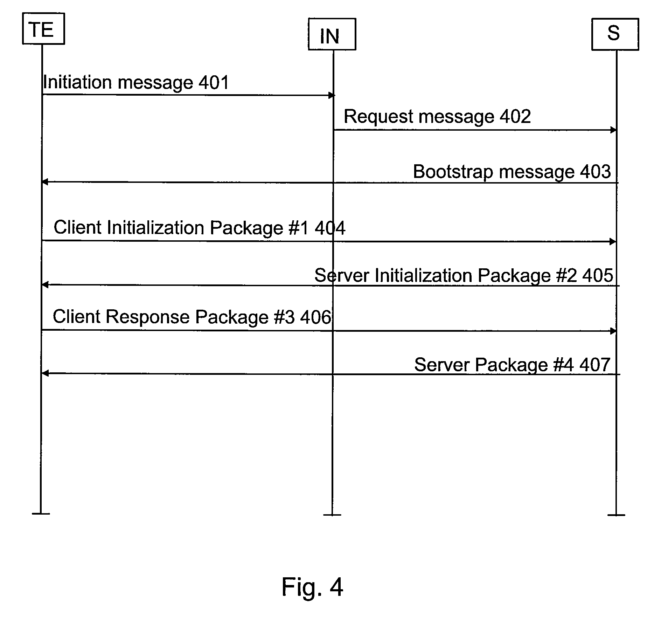

Figure 3 illustrates initiation of device management utilizing configuration messages. The management server S may be any network element providing network settings, such as a proprietary server of a local network operator providing Internet access point settings. Although no specific client-server management protocol is needed, the TE acts as the client receiving settings from the provisioning server S. As illustrated in connection with Figure 2, the intermediary node IN selects the appropriate management server S based on the initiation message 301 from the TE and the management server information and transmits at least one request to the server S. The initiation message 301 may be a short message, for instance. In the example of Figure 3, the intermediary node IN may check the capabilities of the terminal TE and the selected management server S (the network related thereto). Based on this check, it sends requests to the management server S for GPRS settings 302, WAP settings 303 and MMS (Multimedia Messaging Service) settings 304.

The server S sends, as a response to requests 302, 303, and 304, a GPRS settings message 305, a WAP settings message 306 and a MMS (Multimedia Messaging Service) settings message 307. Although not shown in Figure 3, the terminal TE accepts these messages individually and adjusts the settings accordingly. Thus, the IN may by the correct order of requests 302 to 304 ensure that the settings are sent to the TE in a correct order. According to a preferred embodiment, the functions of the IN are transparent to the server S to which the requests 302 to 304 appear as regular configuration requests from the terminal TE.

Figure 4 illustrates the initiation of device management utilizing a device management protocol, in this embodiment the SyncML Device Management (DM) protocol. The terminal TE, operating as a client device according to the SyncML device management standard, thus comprises a client agent CA that attends to functions associated with a management session in the client device. The device S operating as the SyncML DM server comprises a server agent SA. In the client device TE, the issues to be managed are arranged as management objects. Management objects are entities in the client device TE and manageable by the management server's S management commands. The management object may, for instance, be an integer or a large entity, such as a background picture or a screen saver. Actions that can be taken against a management object by DM protocol commands may include reading and setting parameter keys and values. Another management object could be the run-time environment for software applications on a device. Actions that can be taken against this type of an object might include installing, upgrading, or uninstalling software elements.

The intermediary node IN selects the appropriate management server S based on the initiation message 401 from the TE and transmits the request 402 to the server S. The request 401 may be modified by the IN into the format understood by the server S if the initiation message 401 cannot be sent as such to the server S. The messages 401 and 402 may utilize features in already specified SyncML DM specifications such as the specified message formats. For instance, the request 402 can be based on the DM WSI (Web Services Interface). WSI enables external applications to access device management services.

In order for a device to be able to initiate a management session it must be provisioned with SyncML DM settings. The process of changing a device from an un-provisioned, empty, state in to a state where it is able to initiate a management session is called a SyncML DM bootstrap. Therefore, if the terminal TE has not previously performed such a SyncML DM bootstrap, it has to be performed for the TE as illustrated by the message 403. Preferably, the server sends a bootstrap message to the TE whether or not the terminal TE has been provisioned before. This embodiment enables a more reliable device management initiation since situations in which the provisioning information in the TE is no longer valid can be avoided. Before forming and sending the bootstrap message 403, the server S may check the client capabilities from a capability database supporting the SyncML DM, for instance from the Nokia Terminal Management Server. The client TE can then be bootstrapped according to the message 403. It is important to note that the device TE may be arranged to send the initiation message in phase 202 of Figure 2 even if it has not provisioned with SyncML device management settings. The SyncML DM has been designed to meet the management requirements of many different types of devices. Currently two profiles, WAP and Plain, are specified, but as interest in the SyncML DM grows and its usage increases, more profiles can be added. In case of a WAP profile, there is no respond from the terminal TE to the server S for the bootstrap message 403. Any bootstrap profile may be initiated from the intermediary node IN. For more details on the SyncML DM bootstrap, reference is made to the OMA SyncML specification *"SyncML Device Management Bootstrap",* version 1.1, 15 February 2002, 18 pages.

After the bootstrap or, if the TE has previously been provisioned with the SyncML device management settings, after the message 403, establishment of a SyncML device management session can be initiated. In case of a WAP profile, the bootstrap message 403 already can comprise alert information to trigger the DM session establishment from the terminal TE. Otherwise, the server S sends package #0: Alert from the server 405 to the TE. The TE can then respond to the alert information by package #1 Client Initialization 406. Next, packages #2 407, #3 408, and #4 409 may be sent according to the SyncML DM specifications. For a more detailed description of the SyncML device management protocol, reference is made to the SyncML organization specification *'SyncML Device Management Pratocol',* version 1.1, 15 February 2002, 37 pages.

According to a preferred embodiment, the WAP push technology is used between the TE and the IN for transferring the initiation message 301, 401. The interface between the intermediary node IN and the server S can be based on a device management web service interface and thus the request 302, 303, 304, 402 may be carried by HTTP.

According to a further embodiment, the intermediary node IN is able to recognize, using the unique device or subscriber identifier from the initiation message, that the client device TE needs to be provisioned for corporate use, in addition to data transmission service by the operator. This triggers the IN to forward the device information to a corporate management server in addition to a management server of the network operator. The corporate management server can send the connectivity settings to the client TE for instance via smart messaging or using WAP Bootstrap. This embodiment helps corporations to keep track of the provisioned devices and update connectivity settings when needed.

It will be obvious to a person skilled in the art that as technology advances, the inventive concept can be implemented in various ways. The invention and its embodiments are not limited to the examples described above but may vary within the scope of the claims.

## Claims

1. A method of initiating device management between a management server and a client, the method comprising:
transmitting a request to the management server for initiating device management for the client, and
transmitting as a response to the request, a device management message from the management server to the client,
**characterized by** further comprising:
transmitting an initiation message from the client to an intermediary node maintaining information about management servers,
checking the initiation message at the intermediary node,
selecting an appropriate management server for the client by the intermediary node on the basis of the initiation message and the management server information, and
transmitting the request to the management server from the intermediary node.

2. A method according to claim **1, characterized by**
forming the request in the intermediary node by modifying the received initiation message.

3. A method according to claim 1 or 2, **characterized by**
maintaining in the intermediary node, information about properties of the management servers,
selecting the appropriate management server on the basis of the property information, and/or
forming the request by the intermediary node on the basis of the property information.

4. A method according to any one of the preceding claims, **characterized by**
transmitting device specific information on the device functioning as the client in the initiation message,
selecting the appropriate management server on the basis of the received device information, and/or
forming the request for the management server on the basis of the received device information.

5. A method according to any one of the preceding claims, **characterized in that**
the intermediary node is arranged to maintain associations of management servers to network or network operator identifiers,
the initiation message comprises, or is associated with, at least one identifier by which the network or the network operator providing services for the client may be determined,
the intermediary node is arranged to determine the network or network operator identifier from the initiation message, and
the intermediary node is arranged select the management server associated with the network or network operator identifier.

6. A device management system comprising a management server and a client, wherein
the management server is arranged to receive a request for initiating device management for the client, and
the management server is arranged to transmit as a response to the request, a device management message to the client,
**characterized in that**
the client is arranged to transmit an initiation message to an intermediary node maintaining information about management servers,
the intermediary node is arranged to check the initiation message,
the intermediary node is arranged to select appropriate management server for the client on the basis of the initiation message and the management server information, and
the intermediary node is arranged to transmit the request to the management server.

7. A data processing device for a device management system, **characterized in that** the data processing device comprises:
means for maintaining information about device management servers,
means for receiving an initiation message from a device management client device,
means for checking the initiation message,
means for selecting an appropriate management server for the client on the basis of the initiation message and the management server information, and
means for transmitting the request to the selected management server.

8. A data processing device comprising means for acting as a client for device management, **characterized in that** the data processing device further comprises:
means for maintaining information on at least one intermediate server for device management initiation,
means for forming an initiation message adapted for the intermediate server as a response to a need to initiate device management for the data processing device, and
means for transmitting the initiation message to the intermediate server.

9. A computer program product, **characterized in that** the computer program product comprises program code causing, when executed in a data processing device, the data processing device to:
maintain information about device management servers,
receive an initiation message from a device management client device,
check the initiation message,
select an appropriate management server for the client on the basis of the initiation message and the management server information, and
transmit the request to the selected management server.
